# DEMANDE DE BREVET EUROPEEN

(11) **EP 1 555 819 A1**
(43) Date de publication de la demande: **20.07.2005**
(21) Numéro de dépôt: 04290086.0
(22) Date de dépôt: 13.01.2004
(51) Int. Cl.: H04N 7/14

(54) **Procédé et dispositif d'établissement d'une session de visiophonie**

(71) Demandeur: France Telecom S.A., 75505 Paris Cedex (FR)
(72) Inventeur: Bouille, Philippe, 22560 Pleumeur Bodou (FR)
(74) Mandataire: Maillet, Alain

(57) **Abrégé**

L'invention concerne un procédé d'établissement d'une session de visiophonie entre deux dispositifs de visiophonie reliés par l'intermédiaire d'un réseau de télécommunication par paquets, caractérisé en ce que chaque dispositif de visiophonie est relié à un combiné téléphonique, chaque combiné téléphonique est relié à un réseau téléphonique commuté par l'intermédiaire du dispositif de visiophonie auquel il est relié et en ce que le procédé comporte les étapes, effectuées par chaque dispositif de visiophonie, de détection d'un établissement de communication téléphonique entre les deux combinés téléphoniques par l'intermédiaire du réseau téléphonique commuté, de détection d'au moins une commande prédéterminée générée à partir d'un des combinés téléphoniques et d'établissement d'une session de visiophonie entre les deux dispositifs de visiophonie reliés aux combinés téléphoniques sur le réseau de télécommunication par paquets. L'invention concerne aussi le dispositif de visiophonie associé et le combiné téléphonique associé.

## Description

La présente invention concerne un procédé et un dispositif d'établissement d'une session de visiophonie.

Elle concerne également un combiné téléphonique associé à un dispositif de visiophonie selon la présente invention.

L'invention se situe dans le domaine de la visiophonie dans laquelle l'image vient enrichir une communication audio entre deux correspondants par l'intermédiaire d'un réseau de télécommunication.

Sont connus les dispositifs de transfert de données audio et vidéo sur un même réseau de télécommunication. L'échange de flux de données entre des visiophones sur un réseau de télécommunication de type Réseau Téléphonique Commuté (RTC) permet aux possesseurs de tels visiophones de pouvoir communiquer par la voix et l'image avec leur correspondant si celui-ci bien sûr possède un terminal équivalent.

Le transfert de l'image sur un réseau RTC nécessite néanmoins une forte réduction de la qualité de l'image transmise. Ceci pénalise l'utilisation de tels services.

Dans la demande de brevet américain publiée sous la référence 2001/0056466 est décrit un système d'établissement de session de travail de collaboration sur un ordinateur par l'intermédiaire d'un réseau de type Internet en enrichissement d'une communication téléphonique établie sur le même réseau de télécommunication.

L'utilisation du réseau Internet comme support d'une communication téléphonique est aujourd'hui peut répandue et pénalise ainsi l'utilisation à grande échelle de ces systèmes.

Sont connus aussi les systèmes de visiophonie dans lesquels la voix est transférée par l'intermédiaire d'un premier réseau de télécommunication tandis que l'image est transmise sur un second réseau de télécommunication.

Ce type de système de visiophonie pénalise l'utilisateur d'un tel système en ce sens qu'il est nécessaire d'établir deux communications simultanées sur deux réseaux de télécommunication différents, ce qui augmente ainsi le coût de la communication facturée à l'utilisateur.

De plus, ce système de visiophonie nécessite une modification du ou des réseaux de télécommunication et le coût de déploiement de tels services limite l'implémentation de ceux-ci.

L'invention a pour but de résoudre les inconvénients de l'art antérieur en proposant un procédé et un dispositif d'établissement de session de visiophonie dans lesquels l'utilisateur, lors d'une communication téléphonique audio classique par l'intermédiaire d'un réseau RTC, peut enrichir celle-ci de données vidéo de bonne qualité tout en garantissant un coût de communication limité. L'invention vise aussi à garantir aux utilisateurs de la présente invention une bonne qualité de session de visiophonie et cela sans avoir à modifier les réseaux de télécommunication utilisés par la présente invention.

A cette fin, selon un premier aspect, l'invention propose un procédé d'établissement d'une session de visiophonie entre deux dispositifs de visiophonie reliés par l'intermédiaire d'un réseau de télécommunication par paquets, caractérisé en ce que chaque dispositif de visiophonie est relié à un combiné téléphonique, chaque combiné téléphonique est relié à un réseau téléphonique commuté par l'intermédiaire du dispositif de visiophonie auquel il est relié et le procédé comporte les étapes, effectuées par chaque dispositif de visiophonie, de détection d'un établissement de communication téléphonique entre les deux combinés téléphoniques par l'intermédiaire du réseau téléphonique commuté, de détection d'au moins une commande prédéterminée générée à partir d'un des combinés téléphoniques et d'établissement d'une session de visiophonie entre les deux dispositifs de visiophonie reliés aux combinés téléphoniques sur le réseau de télécommunication par paquets.

Corrélativement, l'invention concerne un dispositif de visiophonie pour l'établissement d'une session de visiophonie entre deux dispositifs de visiophonie reliés par l'intermédiaire d'un réseau de télécommunication par paquets, caractérisé en ce que chaque dispositif de visiophonie est relié à un combiné téléphonique, chaque combiné téléphonique est relié à un réseau téléphonique commuté par l'intermédiaire du dispositif de visiophonie auquel il est relié et en ce que le dispositif de visiophonie comporte des moyens de détection d'un établissement de communication téléphonique entre les deux combinés téléphoniques par l'intermédiaire du réseau téléphonique commuté, des moyens de détection d'au moins une commande prédéterminée générée à partir d'un des combinés téléphoniques et des moyens d'établissement d'une session de visiophonie entre les deux dispositifs de visiophonie reliés aux combinés téléphoniques sur le réseau de télécommunication par paquets.

Ainsi, lorsque deux correspondants sont en communication par l'intermédiaire d'un réseau RTC, il est possible d'établir une session de visiophonie entre les correspondants par l'intermédiaire d'un autre réseau de télécommunication en garantissant une bonne qualité de restitution des images vidéo transmises.

Selon un autre aspect de l'invention, la commande prédéterminée est une combinaison prédéterminée de signaux de numérotation à fréquences vocales.

Ainsi, en utilisant les signaux de numérotation à fréquences vocales comme commande pour l'établissement d'une session de visiophonie entre les deux correspondants, des combinés téléphoniques classiques peuvent être utilisés selon la présente invention.

Selon un autre aspect de l'invention, chaque dispositif de visiophonie détecte une commande prédéterminée générée respectivement à partir du combiné téléphonique auquel il est relié.

Ainsi, la session de visiophonie ne peut être établie que si chaque correspondant désire que la session de visiophonie soit établie. Ce souhait est matérialisé en générant une commande d'établissement de la session de visiophonie par l'intermédiaire de son combiné téléphonique.

Selon un autre aspect de l'invention, la session de visiophonie est effectuée par l'intermédiaire d'un serveur de mise en relation.

Selon un autre aspect de l'invention, chaque dispositif de visiophonie s'enregistre auprès du serveur de mise en relation.

Selon un autre aspect de l'invention, chaque dispositif de visiophonie reçoit une confirmation de son enregistrement auprès du serveur de mise en relation et génère au moins un message prédéterminé à destination du combiné téléphonique auquel il est relié.

Ainsi, le correspondant est informé automatiquement de la possibilité de commander un établissement de session de visiophonie sans avoir à échanger avec le correspondant distant des informations telles que la possession d'un dispositif de visiophonie selon la présente invention.

Selon un autre aspect de l'invention, lors de l'établissement de la communication téléphonique entre les deux combinés téléphoniques, le numéro de téléphone du combiné téléphonique appelé composé à partir du combiné téléphonique appelant est détecté et mémorisé par le dispositif de visiophonie relié au combiné téléphonique appelant.

Ainsi, le dispositif de visiophonie du correspondant appelant dispose d'informations permettant d'identifier le correspondant appelé.

Selon un autre aspect de l'invention, le numéro de téléphone mémorisé est transféré par le dispositif de visiophonie relié au combiné téléphonique appelant par l'intermédiaire du réseau de télécommunication par paquets au serveur de mise en relation pour la détermination des identificateurs de ressources uniformes URI publiques et/ou privées correspondant au dispositif de visiophonie relié au combiné téléphonique appelé.

Ainsi, et sans l'intervention d'un correspondant, il est possible de déterminer l'adresse du dispositif de visiophonie distant et donc de pouvoir établir une session de visiophonie sur un autre réseau de télécommunication que celui sur lequel la communication a été engagée.

Selon un autre aspect de l'invention, la communication téléphonique entre les deux combinés téléphoniques par l'intermédiaire du réseau téléphonique commuté est libérée lorsque la session de visiophonie sur le réseau de télécommunication par paquets est établie entre les deux dispositifs de visiophonie.

Ainsi, le coût lié à la session de visiophonie est réduit.

L'invention concerne aussi un procédé d'établissement d'une session de visiophonie entre deux dispositifs de visiophonie reliés par l'intermédiaire d'un réseau de télécommunication par paquets, caractérisé en ce que chaque dispositif de visiophonie est relié à un combiné téléphonique, chaque combiné téléphonique est relié à un réseau téléphonique commuté par l'intermédiaire du dispositif de visiophonie auquel il est relié et en ce que le procédé comporte les étapes, effectuées par chaque combiné téléphonique de détermination lors d'une communication téléphonique avec un combiné téléphonique distant de la connexion du combiné téléphonique distant au réseau téléphonique commuté par l'intermédiaire d'un dispositif de visiophonie distant, de commande d'enregistrement du dispositif de visiophonie auquel le combiné téléphonique est relié à un serveur de mise en relation par l'intermédiaire d'un réseau de télécommunication par paquets, d'informations de l'utilisateur du combiné téléphonique de la connexion du combiné téléphonique distant au réseau téléphonique commuté par l'intermédiaire d'un dispositif de visiophonie et de l'enregistrement du dispositif de visiophonie au serveur et de commande d'établissement d'une session de visiophonie entre le dispositif de visiophonie auquel le combiné téléphonique est relié et le dispositif de visiophonie distant, la session de visiophonie étant établie sur un réseau de télécommunication par paquets.

Corrélativement, l'invention propose un combiné téléphonique destiné à être relié à un réseau téléphonique commuté par l'intermédiaire d'un dispositif de visiophonie, le combiné téléphonique comportant des moyens de détermination lors d'une communication téléphonique avec un combiné téléphonique distant de la connexion du combiné téléphonique distant au réseau téléphonique commuté par l'intermédiaire d'un dispositif de visiophonie distant, des moyens de commande d'enregistrement du dispositif de visiophonie auquel le combiné téléphonique est relié à un serveur de mise en relation par l'intermédiaire d'un réseau de télécommunication par paquets, des moyens d'informations de l'utilisateur du combiné téléphonique de la connexion du combiné téléphonique distant au réseau téléphonique commuté par l'intermédiaire d'un dispositif de visiophonie et de l'enregistrement du dispositif de visiophonie au serveur et des moyens de commande d'établissement d'une session de visiophonie entre le dispositif de visiophonie auquel le combiné téléphonique est relié et le dispositif de visiophonie distant, la session de visiophonie étant établie sur un réseau de télécommunication par paquets.

Ainsi, le correspondant est informé automatiquement de la possibilité de commander un établissement de session de visiophonie sans avoir à échanger avec le correspondant distant des informations telles que la possession d'un dispositif de visiophonie selon la présente invention.

L'invention concerne aussi les programmes d'ordinateurs stockés sur un support d'informations, lesdits programmes comportant des instructions permettant de mettre en oeuvre les procédés d'établissement de session de visiophonie précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de visiophonie selon la présente invention;
la Fig. 2 représente un schéma bloc d'un dispositif de visiophonie selon la présente invention ;
la Fig. 3 représente l'algorithme d'établissement d'une session de visiophonie effectuée par un dispositif de visiophonie d'un utilisateur ayant effectué un appel téléphonique à destination d'un correspondant selon un premier mode de réalisation de la présente invention ;
la Fig. 4 représente l'algorithme d'établissement d'une session de visiophonie effectuée par un dispositif de visiophonie d'un utilisateur ayant reçu un appel téléphonique d'un correspondant selon un premier mode de réalisation de la présente invention ;
la Fig. 5 représente l'algorithme d'établissement d'une session de visiophonie effectuée par un combiné téléphonique d'un utilisateur ayant effectué un appel téléphonique à destination d'un correspondant selon un second mode de réalisation de la présente invention ;
la Fig. 6 représente l'algorithme d'établissement d'une session de visiophonie effectuée par un combiné téléphonique d'un utilisateur ayant reçu un appel téléphonique d'un correspondant selon un second mode de réalisation de la présente invention ;
la Fig. 7 représente l'algorithme d'établissement d'une session de visiophonie effectuée par un dispositif de visiophonie d'un utilisateur ayant effectué un appel téléphonique à destination d'un correspondant selon un second mode de réalisation de la présente invention ;
la Fig. 8 représente l'algorithme d'établissement d'une session de visiophonie effectuée par un dispositif de visiophonie d'un utilisateur ayant reçu un appel téléphonique d'un correspondant selon un second mode de réalisation de la présente invention.

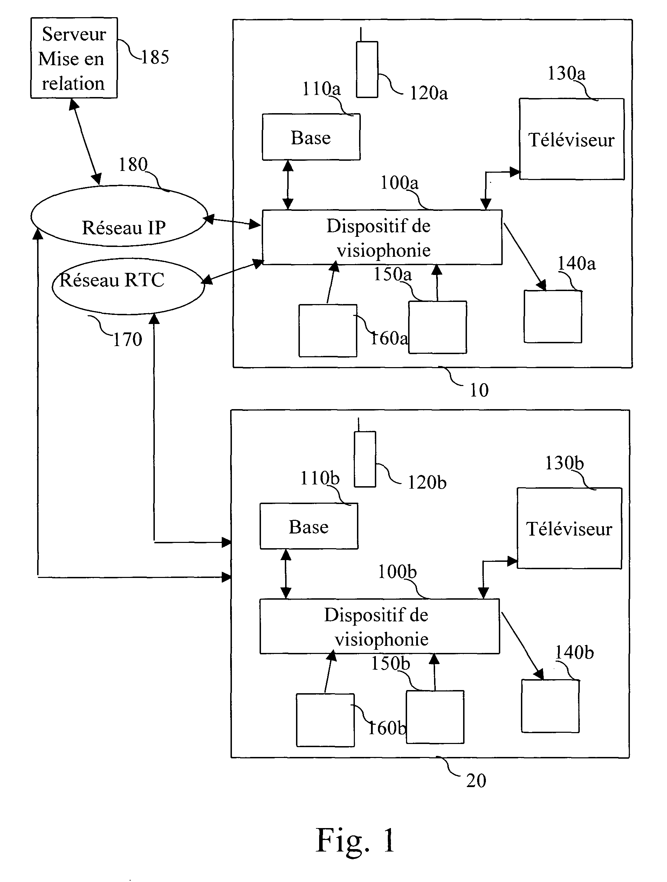

La Fig. 1 représente l'architecture du système de visiophonie selon la présente invention.

Le système de visiophonie selon la présente invention permet à deux abonnés 10 et 20 en communication téléphonique par l'intermédiaire d'un réseau téléphonique commuté 170 d'établir une session de visiophonie par l'intermédiaire d'un réseau de télécommunication par paquets 180.

L'abonné 10 dispose d'un dispositif de visiophonie 100a relié à un réseau de télécommunication par paquets 180 et au réseau de télécommunication téléphonique commuté RTC 170.

Le réseau de télécommunication par paquets 180 est par exemple un réseau de type Internet comprenant un serveur de mise en relation 185.

Le serveur de mise en relation 185 identifie les correspondants souhaitant effectuer une session de visiophonie, et lorsque la session de visiophonie est ouverte, joue le rôle de proxy pour les dispositifs de visiophonie en communication.

De manière générale, un proxy est un serveur qui fait office d'interface entre un abonné et un autre abonné distant. Le proxy fait suivre les messages générés par l'abonné au destinataire. Le destinataire répond au proxy comme si celui-ci était générateur du message. Le proxy fait alors suivre la réponse à l'abonné.

Le dispositif de visiophonie 100a est aussi relié à un téléviseur 130a. Cette liaison est par exemple effectuée par l'intermédiaire d'une prise « péritel » permettant le transfert de signaux audio et des signaux vidéo composite et couleurs entre le dispositif de visiophonie 100a et le téléviseur 130a.

Le téléviseur 130a est un téléviseur classique et est utilisé selon la présente invention comme moyen d'affichage de la séquence vidéo reçue et traitée par le dispositif de visiophonie 100a.

Le téléviseur 130a est aussi utilisé comme moyen de reproduction sonore des messages audio émis par le correspondant 20 distant.

Le dispositif de visiophonie 100a est relié à un combiné téléphonique 120a. Le combiné téléphonique 120a est par exemple et de manière non limitative un combiné téléphonique sans fil de type DECT. DECT est l'acronyme de Digital Enhanced Cordless Telephone. Le combiné téléphonique est relié au dispositif de visiophonie 100a par l'intermédiaire d'une liaison radio avec une station de base 110a DECT.

Le combiné téléphonique 120a est en variante un combiné téléphonique conforme aux normes WIFI © ou Bluetooth ©.

WIFI © est le nom commercial pour la technologie IEEE 802.11 normalisée par l'ETSI (European Telecommunications Standards Institute), Bluetooth © est le nom commmercial de la technologie 802.15, normalisée par L'IEEE (Institute of Electrical and Electronics Engineers).

Au dispositif de visiophonie 100a, sont aussi associés un microphone 160a, une caméra vidéo 150a ainsi qu'au moins un haut-parleur 140a. Il est à remarquer ici que le microphone 160a, la caméra vidéo 150a et le haut-parleur 140a peuvent être intégrés ou non au dispositif de visiophonie 100a.

Le microphone 160a permet à l'abonné 10 de pouvoir converser avec l'abonné 20 lorsque la session de visiophonie est établie.

Le haut-parleur 140a permet la restitution des messages sonores générés par l'abonné 20 lorsque la session de visiophonie est établie.

La caméra 150a permet la capture d'images qui sont transférées à l'abonné 20 lorsque la session de visiophonie est établie.

L'abonné 20 dispose, comme l'abonné 10, d'un dispositif de visiophonie 100b identique au dispositif de visiophonie 100a relié aux réseaux de télécommunication 170 et 180, d'un téléviseur 130b et un combiné téléphonique 120b relié au dispositif de visiophonie 100b par l'intermédiaire d'une station de base 110b.

Le dispositif de visiophonie 100b est aussi associé à un microphone 160b, une caméra vidéo 150b ainsi qu'au moins un haut-parleur 140b.

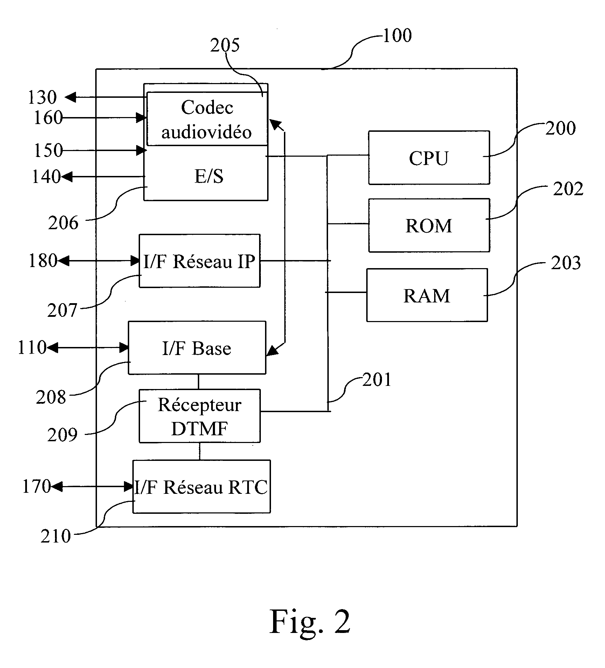

La Fig. 2 représente un schéma bloc d'un dispositif de visiophonie selon la présente invention.

Le dispositif de visiophonie 100 est apte à détecter une commande prédéterminée effectuée au cours d'une communication téléphonique avec un correspondant par l'intermédiaire du réseau RTC 170 par l'utilisateur du combiné téléphonique 120 relié au dispositif de visiophonie 100, à établir une session de visioconférence entre l'utilisateur et son correspondant par l'intermédiaire du réseau Internet 180.

Le dispositif de visiophonie 100 comporte un bus de communication 201 auquel sont reliés une unité centrale 200, une mémoire morte ROM 202, une mémoire vive RAM 203, un moyen de réception de signaux DTMF 209, acronyme de Dual Tone Multi Frequency ou signaux de numérotation à fréquences vocales, une interface de communication avec le réseau Internet 180 et une interface d'entrée sortie 206.

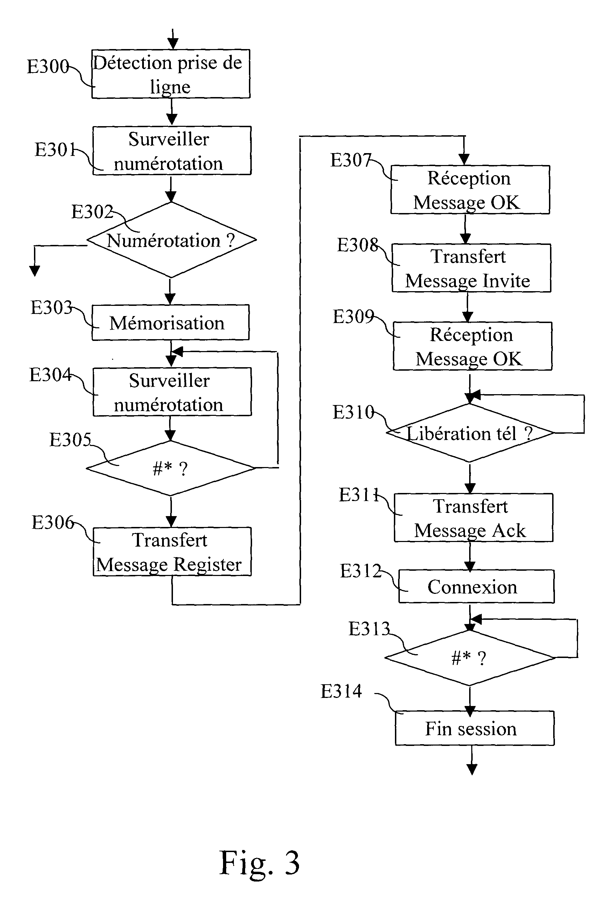

La mémoire morte ROM 202 mémorise entre autres les programmes mettant en oeuvre l'invention qui seront décrits ultérieurement en référence aux Figs. 3, 4, 7 et 8. La mémoire morte ROM 202 est par exemple une mémoire de type EEPROM, acronyme de Electrically Erasable Programmable Read Only Memory.

De manière plus générale, les programmes selon la présente invention sont mémorisés dans un moyen de stockage. Ce moyen de stockage est lisible par un ordinateur ou un microprocesseur 200. Ce moyen de stockage est intégré ou non au dispositif de visiophonie 100, et peut être amovible.

Lors de la mise sous tension du dispositif de visiophonie 100, les programmes selon la présente invention sont transférés dans la mémoire vive 203 qui contient alors le code exécutable de l'invention ainsi que les données nécessaires à la mise en oeuvre de l'invention.

Le microprocesseur 200 est par exemple basé sur une architecture de type RISC.

Le dispositif de visiophonie 100 assure la liaison entre la station de base 110 du combiné téléphonique 120 et le réseau RTC 170 par l'intermédiaire d'une interface réseau RTC 210 et une interface station de base 208.

Les interfaces réseau RTC 210 et station de base 208 sont reliées entre elles par l'intermédiaire du moyen de réception de signaux DTMF 209.

Le moyen de réception de signaux DTMF 209 est apte à détecter les signaux de numérotation à fréquences vocales DTMF transitant entre l'interface station de base 208 et le réseau RTC 170. Ces signaux DTMF sont par exemple le numéro de téléphone du correspondant ou un ensemble de signaux DTMF prédéterminés correspondant à des touches prédéterminées du combiné téléphonique 120.

Le moyen de réception de signaux DTMF 209, est dans un mode particulier de réalisation, apte à distinguer les signaux de numérotation à fréquences vocales DTMF prédéterminés générés par l'intermédiaire du combiné téléphonique auquel il est relié de signaux de numérotation à fréquences vocales DTMF prédéterminés générés par l'intermédiaire du combiné téléphonique du correspondant distant.

Le moyen de réception de signaux DTMF 209 ne traite alors dans cette variante que les signaux de numérotation à fréquences vocales DTMF prédéterminés générés par l'intermédiaire du combiné téléphonique auquel il est relié.

L'interface réseau RTC 210 est une interface classique, connue sous la dénomination Interface Z. Elle permet entre autres de commander une prise de ligne ou un raccrochage de celle-ci.

L'interface réseau RTC 210 est apte à libérer une communication téléphonique établie entre deux correspondants lorsque la session de visiophonie est établie.

L'interface réseau RTC 210 est apte à générer un courant de boucle entre le dispositif de visiophonie 100 et la station de base 110 lorsque la session de visiophonie est établie de manière à permettre le transfert d'informations sonores entre le dispositif de visiophonie 100 et le combiné téléphonique 120.

L'interface station de base 208 est, dans un mode particulier de la présente invention, reliée à un moyen de codage décodage audio vidéo 205.

L'interface réseau 207 est une interface permettant la transmission et la réception d'informations par l'intermédiaire du réseau de télécommunication par paquets 180.

Cette interface assure l'échange de messages pour l'établissement d'une session de visiophonie entre deux abonnés 10 et 20. Elle permet aussi le transfert des données audiovisuelles lorsque la session de visiophonie est établie.

L'interface réseau 207 est, dans un mode préféré de réalisation, une interface permettant avec un réseau local par exemple de type Ethernet la communication avec des dispositifs informatiques de l'abonné ou une communication avec un modem par exemple de type ADSL. ADSL est l'acronyme de « Asynchronous Digital Subscriber Line ».

En variante, l'interface réseau 207 est constituée d'un modem ADSL.

L'interface entrée sortie 206 est une interface apte à mettre en forme les signaux issus du microphone 160 et de la caméra 150 pour un transfert de ceux-ci vers le correspondant lors d'une session de visiophonie. L'interface entrée sortie 206 est aussi apte à traiter et décoder les signaux audiovisuels reçus du correspondant lors d'une session de visiophonie pour que ceux-ci soient restitués par le haut-parleur 140, voire le combiné téléphonique 120 et le téléviseur 130.

Pour cela, l'interface entrée sortie 206 comporte un codeur décodeur audio vidéo 205.

Le codeur décodeur audio vidéo 205 est apte à décoder les données reçues par l'intermédiaire de l'interface réseau 180 et à former des signaux analogiques qui sont transférés au téléviseur 130 par l'intermédiaire d'une liaison de type Péritel et à au moins un haut-parleur tel que par exemple le haut-parleur 140.

Par exemple, le codeur décodeur audio vidéo 205 est apte à coder et/ou décoder les données conformément à la norme H263.

Le codeur décodeur audio vidéo 205 est apte à coder les signaux issus du microphone 140 et de la caméra 150 sous forme de signaux numériques pour que ceux-ci soient transférés sur le réseau de télécommunication 180.

Dans une variante de réalisation de la présente invention, le codeur décodeur audio vidéo 205 est apte à décoder les signaux audio reçus par l'intermédiaire de l'interface réseau 207 et transmis à destination du combiné téléphonique 120. Selon cette même variante, les signaux audio issus du combiné téléphonique 120 sont codés par le codeur décodeur audio vidéo 205 sous forme de signaux numériques pour que ceux-ci soient transférés sur le réseau de télécommunication 180.

L'interface entrée sortie 140 comporte en outre des moyens de connexion permettant de relier des périphériques tels que des dispositifs d'enregistrement de séquences vidéo tels que des magnétoscopes, des dispositifs de capture d'image tels que des caméscopes ou des appareils photos numériques.

Par la suite, lorsque nous parlerons d'un des éléments du dispositif de visiophonie 100 précédemment décrits, celui-ci comportera un indice « a» lorsque ceux-ci sont des éléments du dispositif de visiophonie 100a de l'abonné 10 et un indice « b » lorsque ceux-ci sont des éléments du dispositif de visiophonie 100b de l'abonné 20.

La Fig. 3 représente l'algorithme d'établissement d'une session de visiophonie effectuée par un dispositif de visiophonie d'un utilisateur 10 ayant effectué un appel téléphonique à destination d'un correspondant 20 selon un premier mode de réalisation de la présente invention.

Le processeur 200a du dispositif de visiophonie 100a lit, à partir de la mémoire morte ROM 102a, les instructions du programme correspondant aux étapes E300 à E314 de la Fig. 3 et les charge en mémoire vive 203a pour les exécuter.

A l'étape E300, le processeur 200a du dispositif de visiophonie 100a détecte une prise de ligne effectuée par la station de base 110a du combiné téléphonique 120a de l'abonné 10.

Cette détection est par exemple effectuée en détectant l'apparition d'un courant électrique dans la ligne téléphonique reliant la station de base 110a et le commutateur du réseau RTC 170 gérant la ligne téléphonique de l'abonné 10.

Cette détection est effectuée par l'interface réseau RTC 210a et est notifiée au processeur 200a du dispositif de visiophonie 100a.

A la détection de l'apparition d'un courant électrique dans la ligne téléphonique reliant la station de base 110a et le commutateur du réseau RTC 170, le processeur 200a passe à l'étape suivante E301.

A l'étape suivante E301, le processeur 200a commande le moyen de réception de signaux DTMF 209a pour que celui-ci entre dans un processus de détection de signaux de numérotation à fréquences vocales DTMF sur la liaison entre l'interface station de base 208a et l'interface réseau RTC 210a.

La détection de fréquences vocales est effectuée pendant une durée prédéterminée par exemple de l'ordre de 30 secondes.

Cette étape effectuée, le processeur 200a passe à l'étape E302 qui consiste à vérifier si au moins une fréquence vocale DTMF a été détectée sur la liaison entre l'interface station de base 208a et l'interface réseau RTC 210a. Ceci correspond à la composition d'un numéro de téléphone d'un correspondant.

Dans la négative, le processeur 200a arrête l'algorithme, retourne à l'étape E300 et attend une nouvelle détection de prise de ligne.

Dans l'affirmative, le processeur 200a mémorise dans la mémoire vive RAM 203a les symboles équivalents aux signaux de numérotation à fréquences vocales DTMF précédemment détectées.

Ces symboles sont le numéro de téléphone du correspondant que l'abonné 10 souhaite joindre. Ce correspondant est par exemple l'abonné 20.

Cette opération effectuée, le processeur 200 passe à l'étape suivante E304.

A cette étape, le processeur 200 commande le moyen de réception de signaux DTMF 209a pour que celui-ci entre dans un processus de détection de signaux de numérotation à fréquences vocales DTMF sur la liaison entre l'interface station de base 208a et l'interface réseau RTC 210a.

A l'étape suivante E305, le processeur 200a vérifie si des signaux de numérotation à fréquences vocales correspondant à des symboles prédéterminés ont été détectés.

Ces symboles prédéterminés sont par exemple et de manière non limitative la suite de symboles « #* ».

Ce processus de détection de signaux de numérotation à fréquences vocales DTMF constitué par les étapes E304 et E305 est effectué tant que les signaux de numérotation à fréquences vocales correspondant aux symboles prédéterminés n'ont pas été détectés et cela pendant toute la durée de la communication téléphonique.

A la détection des signaux de numérotation à fréquences vocales correspondant aux symboles prédéterminés, le processeur 200a passe à l'étape suivante E306.

En composant sur le combiné téléphonique 120 cette séquence de symboles prédéterminés, l'abonné 10 a émis le souhait de passer d'une communication téléphonique classique avec son correspondant à une communication de visiophonie.

En effet, lors d'une conservation téléphonique classique, les correspondants, s'ils disposent de dispositifs de visiophonie selon la présente invention, peuvent décider d'un commun accord de basculer en visiophonie sur un réseau de télécommunication autorisant des débits de transmission importants. Ce réseau est selon la présente invention un réseau de type DSL.

A l'étape E306, le processeur 200a du dispositif de visiophonie procède à l'établissement d'une session de visiophonie.

Pour cela, le processeur 200a commande le transfert par l'intermédiaire de l'interface réseau 207a et du réseau de télécommunication par paquets 180 d'un message à destination du serveur de mise en relation 185.

Selon un mode préféré de réalisation, l'établissement de la session de visiophonie est effectué conformément au protocole SIP. Le protocole SIP, acronyme de « Session Initiation Protocol » est décrit dans la recommandation de l'IETF RFC 3261.

Bien entendu, d'autres protocoles peuvent être utilisés dans la présente invention. Ces protocoles sont par exemple le protocole H323 ou le protocole MGCP acronyme de « Media Gateway to Media Controller Protocols ».

Le message transféré à l'étape E306 est un message de type « Register » conforme au protocole SIP.

Le message « Register » est un message pour enregistrer le dispositif de visiophonie 100a au serveur de mise en relation 185. Ce message comprend l'adresse URL ainsi que l'adresse IP du dispositif de visiophonie 100.

Cette opération effectuée, le processeur 200a attend à l'étape suivante E307 la réception par l'intermédiaire de l'interface réseau 207a et du réseau de télécommunication 180 d'un message de confirmation du serveur de mise en relation 185.

Ce message est du type « 200 OK » lorsque le protocole SIP est utilisé.

Cette opération effectuée, le processeur 200a commande à l'étape E308 le transfert par l'intermédiaire de l'interface réseau 207a et du réseau de télécommunication par paquets d'un message à destination du serveur de mise en relation 185 d'un message « Invite » conforme au protocole SIP.

Ce message comprend le numéro de téléphone mémorisé précédemment à l'étape E303.

Le serveur de mise en relation 185 détermine à partir de ce numéro de téléphone au format E.164 (recommandation du CCITT), les identificateurs de ressources uniformes URI publiques et/ou privées correspondant au numéro de téléphone compris dans le message « Invite ».

Ces identificateurs de ressources uniformes sont stockés dans une base de données associée au serveur de mise en relation 185.

Cette opération effectuée, le processeur 200a attend à l'étape suivante E309 la réception par l'intermédiaire de l'interface réseau 207a et du réseau de télécommunication 180 d'un message de confirmation du serveur de mise en relation 185.

Ce message est du type « 200 OK » lorsque le protocole SIP est utilisé.

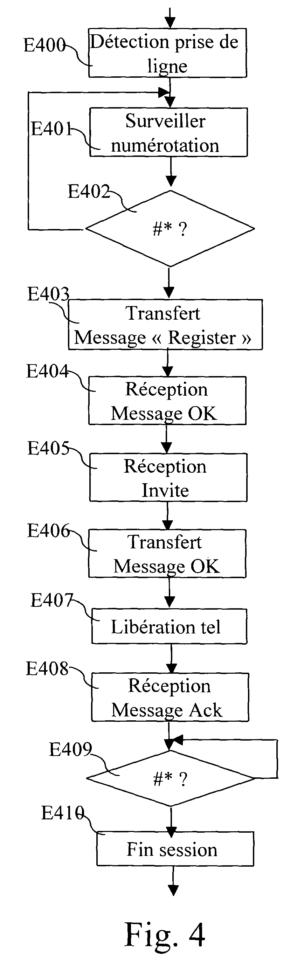

Comme cela sera décrit en référence à la Fig. 4, le serveur de mise en relation 185 effectue différentes tâches préalablement à la génération du message de confirmation.

A la réception du message de confirmation, le processeur 200a passe à l'étape suivante E310.

A l'étape E310, le processeur 200a entre dans une boucle d'attente de réception d'une tonalité d'occupation générée par le commutateur du réseau RTC 170 auquel le combiné téléphonique 120a est associé. Cette tonalité d'occupation correspond à la libération de la ligne téléphonique effectuée par l'abonné 20 lors de l'étape E407 de la Fig. 4 qui sera décrite ultérieurement.

La détection de la tonalité d'occupation est effectuée par le moyen de réception de signaux DTMF 209a.

A la détection par le moyen de réception de signaux DTMF 209a d'une tonalité d'occupation, le processeur 200a commande l'ouverture de la ligne téléphonique, interrompt ainsi la communication téléphonique et passe à l'étape suivante E311. En parallèle, le processeur 200a commande l'établissement par l'interface réseau RTC 210a d'un courant de boucle avec la station de base 110a du combiné téléphonique 120a.

A l'étape E311, le processeur 200a commande le transfert par l'intermédiaire de l'interface réseau 207a et du réseau de télécommunication par paquets 180 d'un message à destination du serveur de mise en relation 185 d'un message d'accusé de réception.

Ce message d'accusé de réception est un message de type « SIP ACK » lorsque le protocole SIP est utilisé.

Dans une variante de réalisation de la présente invention, le processeur 200a n'effectue pas la boucle d'attente de l'étape E310 et le processeur 200a, en parallèle au transfert du message d'accusé de réception, commande l'ouverture de la ligne téléphonique et interrompt ainsi la communication téléphonique et l'établissement par l'interface réseau RTC 210a d'un courant de boucle avec la station de base 110a du combiné téléphonique 120a.

Cette opération réalisée, le dispositif de visiophonie 100a est alors connecté à l'étape E312 au dispositif de visiophonie 100b du correspondant par l'intermédiaire du serveur de mise en relation 185 qui fait alors office de proxy.

Pendant la session de visiophonie, les signaux vidéo reçus du dispositif de visiophonie 100b distant sont décodés et transférés au téléviseur 130a.

Les signaux audio reçus du dispositif de visiophonie 100b distant sont décodés et transférés au téléviseur 130a et/ou au haut-parleur 140a et/ou au combiné téléphonique 120a.

Pendant la session de visiophonie, les signaux vidéo reçus de la caméra 150a sont codés et transférés au dispositif de visiophonie distant 100b.

Les signaux audio reçus du microphone 160a et/ou du combiné téléphonique 120a sont décodés et transférés vers le dispositif de visiophonie distant 100b.

A l'étape suivante E313, le processeur 200a entre dans une boucle d'attente de réception d'une combinaison de signaux de numérotation à fréquences vocales DTMF par le moyen de réception de signaux DTMF 209a.

Cette combinaison de fréquences vocales correspond par exemple aux signaux de numérotation à fréquences vocales associés aux symboles « #* » et est représentative du souhait de l'abonné 10 d'arrêter la session de visiophonie.

A la détection par le moyen de réception de signaux DTMF 209a d'une combinaison de signaux de numérotation à fréquences vocales DTMF, le processeur 200a passe à l'étape suivante E314.

En variante, le processeur 200a entre à l'étape E313 dans une boucle d'attente de détection d'un raccrochage du combiné téléphonique 120a par l'abonné 10.

A l'étape E314, le processeur 200a commande le transfert par l'intermédiaire de l'interface réseau 207a et du réseau de télécommunication par paquets 180 d'un message à destination du serveur de mise en relation 185 d'un message de commande de fin de session de visiophonie et termine le présent algorithme.

La Fig. 4 représente l'algorithme d'établissement d'une session de visiophonie effectuée par un dispositif de visiophonie d'un utilisateur ayant reçu un appel téléphonique d'un correspondant selon un premier mode de réalisation de la présente invention.

Le processeur 200 du dispositif de visiophonie 100b de l'abonné appelé 20 lit, à partir de la mémoire morte ROM 202b du dispositif de visiophonie 100b de l'abonné 20, les instructions du programme correspondant aux étapes E400 à E410 de la Fig. 4 et les charge en mémoire vive RAM 203b pour les exécuter.

A l'étape E400, le processeur 200b du dispositif de visiophonie 20 détecte un signal d'appel téléphonique tel qu'un signal de sonnerie généré par le commutateur du réseau RTC 170 auquel est reliée la station de base 110b du combiné téléphonique 120b ainsi qu'une prise de ligne effectuée par la station de base 110b et le combiné téléphonique 120b de l'abonné 20.

Cette détection est effectuée par l'interface réseau RTC 210b et est notifiée au processeur 200b du dispositif de visiophonie 100b.

A la détection du signal d'appel et de la prise de ligne, le processeur 100b passe à l'étape suivante E401.

A cette étape, le processeur 200b commande le moyen de réception de signaux DTMF 209b pour que celui-ci entre dans un processus de détection de signaux de numérotation à fréquences vocales DTMF sur la liaison entre l'interface station de base 208b et l'interface réseau RTC 210b.

A l'étape suivante E402, le processeur 200b vérifie si des signaux de numérotation à fréquences vocales correspondant à des symboles prédéterminés ont été détectés.

Ces symboles prédéterminés sont par exemple et de manière non limitative la suite de symboles « #* ».

Ce processus de détection de signaux de numérotation à fréquences vocales DTMF constitué par les étapes E401 et E402 est effectué tant que les signaux de numérotation à fréquences vocales correspondant aux symboles prédéterminés n'ont pas été détectés et cela pendant toute la durée de la communication téléphonique.

A la détection des signaux de numérotation à fréquences vocales correspondant aux symboles prédéterminés, le processeur 200b passe à l'étape suivante E403.

En composant sur le combiné téléphonique 120b cette séquence de symboles prédéterminés, l'abonné 20 a émis le souhait de passer d'une communication téléphonique classique avec son correspondant à une communication de visiophonie.

En effet, lors d'une conservation téléphonique classique, les correspondants, s'ils disposent de dispositifs de visiophonie selon la présente invention, peuvent décider d'un commun accord de basculer en visiophonie sur un réseau de télécommunication autorisant des débits de transmission importants. Ce réseau est selon la présente invention un réseau de type DSL.

A l'étape E403, le processeur 200b du dispositif de visiophonie 100b procède à l'établissement d'une session de visiophonie.

Pour cela, le processeur 200b commande le transfert par l'intermédiaire de l'interface réseau 207b et du réseau de télécommunication par paquets 180 d'un message à destination du serveur de mise en relation 185.

Selon un mode préféré de réalisation, l'établissement de la session de visiophonie est effectué conformément au protocole SIP.

Bien entendu, d'autres protocoles peuvent être utilisés dans la présente invention. Ces protocoles sont par exemple le protocole H323 ou le protocole MGCP acronyme de « Media Gateway to Media Controller Protocols ». Dans ce cas, les deux dispositifs de visiophonie doivent néanmoins utiliser le même protocole d'ouverture de session.

Le message transféré à l'étape E403 est un message de type « Register » conforme au protocole SIP.

Le message « Register » est un message pour enregistrer le dispositif de visiophonie 100b au serveur de mise en relation 185. Ce message comprend l'adresse URL ainsi que l'adresse IP du dispositif de visiophonie 100b.

Cette opération effectuée, le processeur 200b attend à l'étape suivante E404 la réception par l'intermédiaire de l'interface réseau 207b et du réseau de télécommunication 180 d'un message de confirmation du serveur de mise en relation 185.

Ce message est du type « 200 OK » lorsque le protocole SIP est utilisé.

Cette opération effectuée, le processeur 200b passe à l'étape suivante E405 et attend la réception par l'intermédiaire de l'interface réseau 207b et du réseau de télécommunication 180 d'un message d'invitation du serveur de mise en relation 185.

Ce message d'invitation a été précédemment émis par le dispositif de visiophonie 100a de l'abonné 10 à destination du serveur de mise en relation 185 et retransmis par celui-ci au dispositif de visiophonie 100b de l'abonné 20.

Cette opération effectuée, le processeur 200b commande à l'étape suivante E406 le transfert par l'intermédiaire de l'interface réseau 207b et du réseau de télécommunication 180 d'un message de confirmation à destination du serveur de mise en relation 185 d'un message de confirmation.

Ce message est du type « 200 OK » lorsque le protocole SIP est utilisé.

Ce message est ensuite retransmis par le serveur de mise en relation 185 au dispositif de visiophonie 100a de l'abonné 10 et correspond au message reçu à l'étape E309 de l'algorithme de la Fig. 3.

Cette opération effectuée, le processeur 200b passe à l'étape E407 et commande la libération de la ligne entre le combiné téléphonique 120b et le réseau RTC 170. En parallèle, le processeur 200b commande l'établissement par l'interface réseau RTC 210b d'un courant de boucle avec la station de base 110b du combiné téléphonique 120b.

A l'étape suivante E408, le processeur 200b attend la réception par l'interface réseau 207b d'un message d'accusé de réception du serveur de mise en relation 185 d'un message.

Ce message d'accusé de réception est un message de type « SIP ACK » lorsque le protocole SIP est utilisé.

Ce message d'accusé de réception correspond au message émis par le dispositif de visiophonie 100a à l'étape E311 à destination du serveur de mise en relation 185.

A la réception de ce message, le dispositif de visiophonie 100b est alors connecté au dispositif de visiophonie 100a par l'intermédiaire du serveur de mise en relation 185 qui fait alors office de proxy.

Pendant la session de visiophonie, les signaux vidéo reçus du dispositif de visiophonie 100a distant sont décodés et transférés au téléviseur 130b.

Les signaux audio reçus du dispositif de visiophonie 100a distant sont décodés et transférés au téléviseur 130b et/ou au haut-parleur 140b et/ou au combiné téléphonique 120b.

Pendant la session de visiophonie, les signaux vidéo reçus de la caméra 150b sont codés et transférés au dispositif de visiophonie distant 100a.

Les signaux audio reçus du microphone 160b et/ou du combiné téléphonique 120b sont décodés et transférés vers le dispositif de visiophonie distant 100a.

A l'étape suivante E409, le processeur 200b entre dans une boucle d'attente de réception d'une combinaison de signaux de numérotation à fréquences vocales DTMF par le moyen de réception de signaux DTMF 209b.

Cette combinaison de fréquences vocales correspond par exemple aux signaux de numérotation à fréquences vocales associés aux symboles « #* » et est représentative du souhait de l'abonné 20 d'arrêter la session de visiophonie.

A la détection par le moyen de réception de signaux DTMF 209b d'une combinaison de signaux de numérotation à fréquences vocales DTMF, le processeur 200b passe à l'étape suivante E410.

En variante, le processeur 200b entre à l'étape E409 dans une boucle d'attente de détection d'un raccrochage du combiné téléphonique 120b par l'abonné 20.

A l'étape E410, le processeur 200b commande le transfert par l'intermédiaire de l'interface réseau 207b et du réseau de télécommunication par paquets 180 d'un message à destination du serveur de mise en relation 185 d'un message de commande de fin de session de visiophonie et termine le présent algorithme.

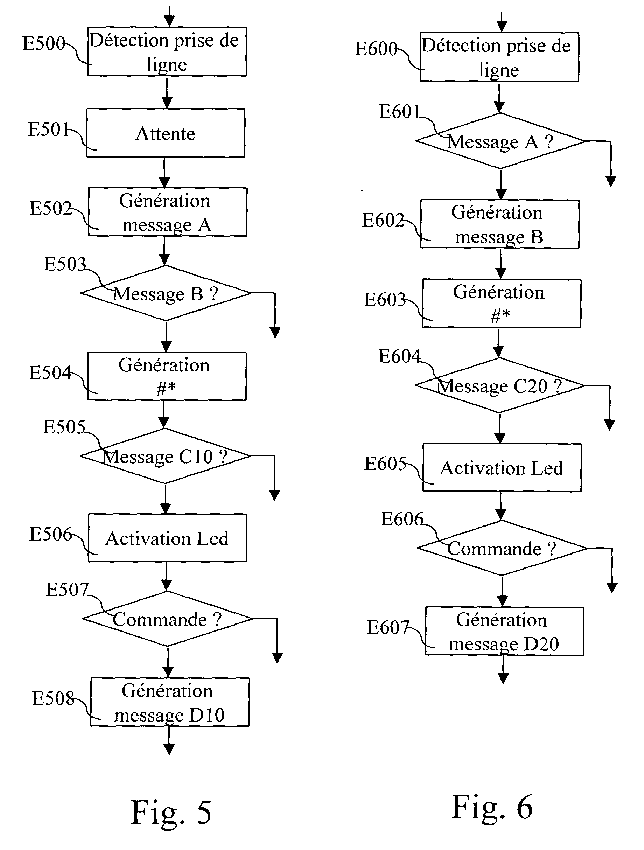

La Fig. 5 représente l'algorithme d'établissement d'une session de visiophonie effectuée par un combiné téléphonique d'un utilisateur ayant effectué un appel téléphonique à destination d'un correspondant selon un second mode de réalisation de la présente invention.

Dans ce mode de réalisation, les combinés téléphoniques de l'appelant et de l'appelé, contrairement au premier mode de réalisation, sont aptes à signaler aux abonnés la possibilité de basculer dans une session de visiophonie lorsque les deux abonnés disposent de dispositifs de visiophonie compatibles.

Dans ce second mode de réalisation et à titre d'exemple, l'abonné 10 effectue un appel téléphonique à destination de l'abonné 20.

Le processeur du combiné téléphonique 120a de l'abonné 10 lit, à partir de la mémoire morte du combiné téléphonique 120a de l'abonné 10, les instructions du programme correspondant aux étapes E500 à E508 de la Fig. 5 et les charge en mémoire vive du combiné téléphonique 120a pour les exécuter.

A l'étape E500, le processeur du combiné téléphonique 120a détecte une prise de ligne par l'abonné 10.

A l'étape suivante E501, le processeur du combiné téléphonique 120a génère sur la ligne téléphonique les signaux de numérotation à fréquences vocales correspondant au numéro de téléphone composé, en l'occurrence le numéro de téléphone de l'abonné 20.

Le numéro composé, le processeur du combiné téléphonique 120a génère à l'étape suivante E502 un message noté message A à destination du combiné téléphonique 120b par l'intermédiaire du réseau RTC 170.

Ce message est par exemple une combinaison de signaux de numérotation à fréquences vocales, voire un message court de type SMS. SMS est l'acronyme de « Short Message Service ».

Le message A est représentatif de la possession par l'abonné 10 d'un dispositif de visiophonie 100a selon la présente invention.

Cette opération effectuée, le processeur du combiné téléphonique 120a passe à l'étape E503 et attend un message de réponse noté message B du combiné téléphonique 120b de l'abonné 20.

Ce message est par exemple une combinaison de signaux de numérotation à fréquences vocales, voire un message court de type SMS.

Le message B est représentatif de la possession par l'abonné 20 d'un dispositif de visiophonie 100b selon la présente invention.

Si aucun message de réponse B n'est reçu dans un laps de temps prédéterminé, le processeur du combiné téléphonique 120a arrête le présent algorithme. En effet, une non réponse du combiné téléphonique 120b indique explicitement que l'abonné B ne dispose pas d'un dispositif de visiophonie 100b selon la présente invention.

Si le processeur du combiné téléphonique 120a reçoit un message de réponse du combiné téléphonique 120b de l'abonné 20, le processeur du combiné téléphonique 120a passe à l'étape suivante E504.

A cette étape, le processeur du combiné téléphonique 120a génère une commande pour la génération de signaux de numérotation à fréquences vocales correspondant à une séquence prédéterminée de symboles telle que la séquence de symboles « #* ».

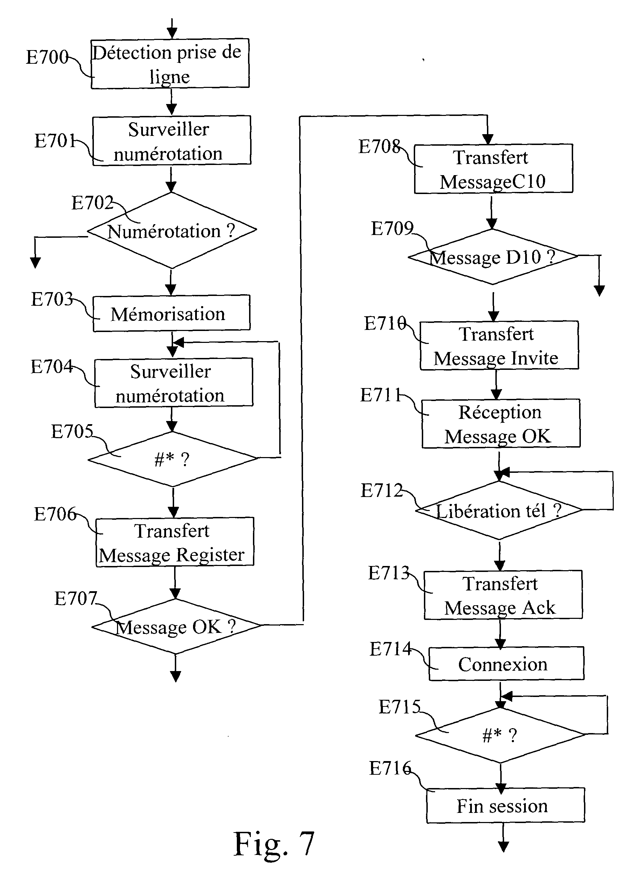

Ces signaux de numérotation à fréquences vocales sont destinés au dispositif de visiophonie 100a, comme cela sera expliqué ultérieurement en référence à la Fig. 7.

Cette opération effectuée, le processeur du combiné téléphonique 120a passe à l'étape E505 et attend un message de réponse noté message C10 du dispositif de visiophonie 120a.

Ce message est par exemple une combinaison de fréquences vocales.

Le message C10 est représentatif de la compatibilité et de l'acceptation par le serveur de mise en relation 185 de l'enregistrement du dispositif de visiophonie 100a à une session de visiophonie.

Si aucun message de réponse C10 n'est reçu dans un laps de temps prédéterminé, le processeur du combiné téléphonique 120a arrête le présent algorithme. En effet, une non réponse du dispositif de visiophonie 100a indique explicitement que l'enregistrement du dispositif de visiophonie 100a à une session de visiophonie a échoué.

Si le processeur du combiné téléphonique 120a reçoit un message de réponse du dispositif de visiophonie 100a, le processeur du combiné téléphonique 120a passe à l'étape suivante E506.

A cette étape, le processeur du combiné téléphonique 120a commande l'activation d'un moyen de notification tel que par exemple une diode électroluminescente présente sur le combiné téléphonique 120a. Bien entendu, d'autres notifications sont aussi envisagées telles que par exemple un message d'annonce vocale.

Cette notification est une invitation à basculer la communication téléphonique sur le réseau RTC 170 vers une session de visiophonie sur le réseau de télécommunication par paquets 180.

Cette opération effectuée, le processeur du combiné téléphonique passe à l'étape suivante E507 et attend une commande prédéterminée de l'abonné 10 par l'intermédiaire du clavier du combiné téléphonique 120a.

Cette commande est par exemple l'appui sur une touche prédéterminée et représentative de l'acceptation par l'abonné 10 du basculement de la communication téléphonique en cours sur le réseau RTC 170 vers une session de visiophonie sur le réseau de télécommunication par paquets 180.

Si aucune commande n'est reçue dans un laps de temps prédéterminé, le processeur du combiné téléphonique 120a arrête le présent algorithme.

Si une commande est reçue, le processeur du combiné téléphonique 120a passe à l'étape suivante E508 et commande la génération d'un message sous la forme de signaux de numérotation à fréquences vocales correspondant à une séquence prédéterminée de symboles.

Ces fréquences vocales, notées message D10 sont destinées au dispositif de visiophonie 100a, comme cela sera expliqué ultérieurement en référence à la Fig. 7.

Cette opération effectuée, le processeur du combiné téléphonique 120a arrête le présent algorithme.

La Fig. 6 représente l'algorithme d'établissement d'une session de visiophonie effectuée par un combiné téléphonique d'un utilisateur ayant reçu un appel téléphonique d'un correspondant selon un second mode de réalisation de la présente invention.

Le processeur du combiné téléphonique 120b de l'abonné 20 lit, à partir de la mémoire morte du combiné téléphonique 120b de l'abonné 20, les instructions du programme correspondant aux étapes E600 à E607 de la Fig. 6 et les charge en mémoire vive du combiné téléphonique 120b pour les exécuter.

A l'étape E600, le processeur du combiné téléphonique 120b détecte un signal d'appel généré par le commutateur du réseau RTC 170 auquel est reliée la station de base 1 10b du combiné téléphonique 120b ainsi que la prise de ligne par l'abonné 20.

Cette opération effectuée, le processeur du combiné téléphonique 120b passe à l'étape E601 et attend la réception d'un message issu du combiné téléphonique 120a de l'abonné 10.

Ce message est par exemple une combinaison de signaux de numérotation à fréquences vocales, voire un message court de type SMS.

Ce message est le message A tel que décrit en référence à l'étape E502 de la Fig. 5. Le message A est représentatif de la possession par l'abonné 10 d'un dispositif de visiophonie 100a selon la présente invention.

Si aucun message A n'est reçu dans un laps de temps prédéterminé, le processeur du combiné téléphonique 120b arrête le présent algorithme. En effet, l'absence de message indique explicitement que l'abonné A ne dispose pas d'un dispositif de visiophonie 100a selon la présente invention.

Si le processeur du combiné téléphonique 120b reçoit un message A du combiné téléphonique 120a de l'abonné 10, le processeur du combiné téléphonique 120b passe à l'étape suivante E602.

A l'étape E602, le processeur du combiné téléphonique 120b génère un message de réponse noté message B à destination du combiné téléphonique 120a de l'abonné 10.

Ce message est par exemple une combinaison de signaux de numérotation à fréquences vocales, voire un message court de type SMS.

Le message B est représentatif de la possession par l'abonné 20 d'un dispositif de visiophonie 100b selon la présente invention.

Cette opération réalisée, le processeur du combiné téléphonique 120b passe à l'étape suivante E603.

A cette étape, le processeur du combiné téléphonique 120b génère une commande pour la génération de signaux de numérotation à fréquences vocales correspondant à une séquence prédéterminée de symboles telle que la séquence de symboles « #* ».

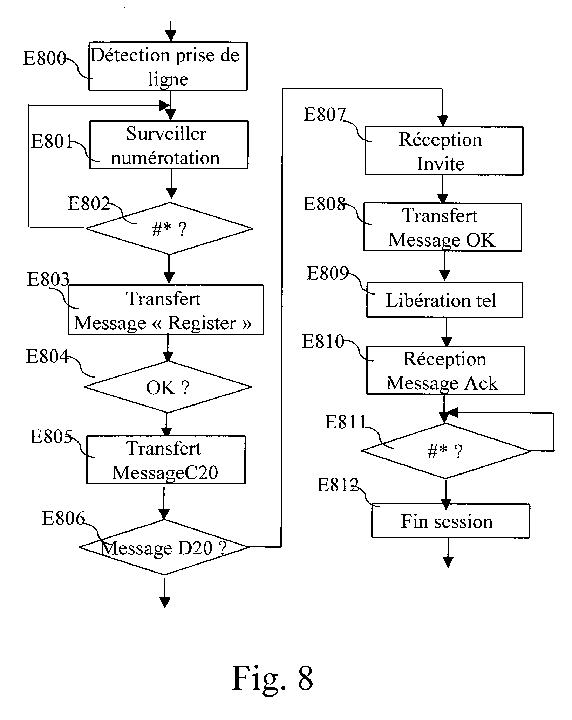

Ces signaux de numérotation à fréquences vocales sont destinés au dispositif de visiophonie 100b, comme cela sera expliqué ultérieurement en référence à la Fig. 8.

Cette opération effectuée, le processeur du combiné téléphonique 120b passe à l'étape E604 et attend un message de réponse noté message C20 du dispositif de visiophonie 120b.

Ce message est par exemple une combinaison de signaux de numérotation à fréquences vocales.

Le message C20 est représentatif de la compatibilité et de l'acceptation par le serveur de mise en relation 185 de l'enregistrement du dispositif de visiophonie 100b à une session de visiophonie.

Si aucun message de réponse C20 n'est reçu dans un laps de temps prédéterminé, le processeur du combiné téléphonique 120b arrête le présent algorithme. En effet, une non réponse du dispositif de visiophonie 100b indique explicitement que l'enregistrement du dispositif de visiophonie 100b à une session de visiophonie a échoué.

Si le processeur du combiné téléphonique 120b reçoit un message de réponse du dispositif de visiophonie 100b, le processeur du combiné téléphonique 120a passe à l'étape suivante E605.

A cette étape, le processeur du combiné téléphonique 120b commande l'activation d'un moyen de notification tel que par exemple une diode électroluminescente présente sur le combiné téléphonique 120b.

Cette notification est une invitation à basculer la communication téléphonique sur le réseau RTC 170 vers une session de visiophonie sur le réseau de télécommunication par paquets 180.

Cette opération effectuée, le processeur du combiné téléphonique 120b passe à l'étape suivante E606 et attend une commande prédéterminée de l'abonné 20 par l'intermédiaire du clavier du combiné téléphonique 120b.

Cette commande est par exemple l'appui sur une touche prédéterminée et représentative de l'acceptation par l'abonné 20 du basculement de la communication téléphonique en cours sur le réseau RTC 170 vers une session de visiophonie sur le réseau de télécommunication par paquets 180.

Si aucune commande n'est reçue dans un laps de temps prédéterminé, le processeur du combiné téléphonique 120b arrête le présent algorithme.

Si une commande est reçue, le processeur du combiné téléphonique 120b passe à l'étape suivante E607 et commande la génération d'un message sous la forme de signaux de numérotation à fréquences vocales correspondant à une séquence prédéterminée de symboles.

Ces signaux de numérotation à fréquences vocales, notés message D20, sont destinés au dispositif de visiophonie 100b, comme cela sera expliqué ultérieurement en référence à la Fig. 8.

Cette opération effectuée, le processeur du combiné téléphonique 120b arrête le présent algorithme.

La Fig. 7 représente l'algorithme d'établissement d'une session de visiophonie effectuée par un dispositif de visiophonie d'un utilisateur ayant effectué un appel téléphonique à destination d'un correspondant selon un second mode de réalisation de la présente invention.

Dans ce second mode de réalisation et à titre d'exemple, l'abonné 10 effectue un appel téléphonique à destination de l'abonné 20.

Le processeur 200a du dispositif de visiophonie 100a lit, à partir de la mémoire morte ROM 102a, les instructions du programme correspondant aux étapes E700 à E716 de la Fig. 7 et les charge en mémoire vive 203a pour les exécuter.

Les étapes E700 à E704 étant respectivement identiques aux étapes E300 à E304 de la Fig. 3, celles-ci ne seront pas plus décrites.

A l'étape E705, le processeur 200a vérifie si des signaux de numérotation à fréquences vocales correspondant à des symboles prédéterminés ont été détectés.

Ces symboles prédéterminés sont par exemple et de manière non limitative la suite de symboles « #* ».

A la détection des signaux de numérotation à fréquences vocales correspondant aux symboles prédéterminés, le processeur 200a passe à l'étape suivante E706.

Ces signaux de numérotation à fréquences vocales ont été générés automatiquement par le processeur du combiné téléphonique 120a à l'étape E504 de la Fig. 5 précédemment décrite.

A l'étape E706, le processeur 200a du dispositif de visiophonie 10 commande le transfert par l'intermédiaire de l'interface réseau 207a et du réseau de télécommunication par paquets d'un message à destination du serveur de mise en relation 185.

Selon un mode préféré de réalisation, l'établissement de la session de visiophonie est effectué conformément au protocole SIP.

Bien entendu, d'autres protocoles peuvent être utilisés dans la présente invention. Ces protocoles sont par exemple le protocole H323 ou le protocole MGCP acronyme de « Media Gateway to Media Controller Protocols ».

Le message transféré à l'étape E706 est un message de type « Register » conforme au protocole SIP.

Le message « Register » est un message pour enregistrer le dispositif de visiophonie 100a au serveur de mise en relation 185. Ce message comprend l'adresse URL ainsi que l'adresse IP du dispositif de visiophonie 100a.

Cette opération effectuée, le processeur 200a attend à l'étape suivante E707 la réception par l'intermédiaire de l'interface réseau 207a et du réseau de télécommunication 180 d'un message de confirmation du serveur de mise en relation 185.

Ce message est du type « 200 OK » lorsque le protocole SIP est utilisé.

Si aucun message n'est reçu, le serveur de mise en relation 185 n'a pas accepté l'enregistrement du dispositif de visiophonie 100a à une session de visiophonie et le processeur 200a arrête le présent algorithme.

Si un message de confirmation d'enregistrement est reçu, le processeur 200a passe à l'étape suivante E708.

A l'étape E708, le processeur 200a commande le transfert d'un message vocal à destination du combiné téléphonique 120a par l'intermédiaire de l'interface réseau RTC 210.

Ce message, noté message C10, est représentatif de la compatibilité et de l'acceptation par le serveur de mise en relation 185 de l'enregistrement du dispositif de visiophonie 1 00a à une session de visiophonie.

Le message C10 est par exemple constitué d'une série de signaux de numérotation à fréquences vocales DTMF.

Cette opération effectuée, le processeur 200a passe à l'étape suivante E709.

A cette étape, le processeur 200a vérifie pendant un laps de temps prédéterminé la réception d'un message noté D10 généré par le combiné téléphonique 120a.

Si aucun message de réponse D10 n'est reçu dans un laps de temps prédéterminé, le processeur 200a arrête le présent algorithme.

En effet, une non réponse du combiné téléphonique 120a indique explicitement que l'abonné 10 ne désire pas que la communication téléphonique en cours sur le réseau RTC 170 soit basculée vers une session de visiophonie sur le réseau de télécommunication par paquets 180.

Si le processeur 200a reçoit un message noté D10 du combiné téléphonique 120a, le processeur 200 passe à l'étape suivante E710.

Les étapes E710 à E716 étant respectivement identiques aux étapes E308 à E314 de la Fig. 3, celles-ci ne seront pas plus décrites.

Lorsque l'étape E716 est effectuée, le processeur 200a arrête le présent algorithme.

La Fig. 8 représente l'algorithme d'établissement d'une session de visiophonie effectuée par un dispositif de visiophonie d'un utilisateur ayant reçu un appel téléphonique d'un correspondant selon un second mode de réalisation de la présente invention.

Le processeur 200b du dispositif de visiophonie 100b de l'abonné appelé 20 lit, à partir de la mémoire morte ROM 202b du dispositif de visiophonie 100b de l'abonné 20, les instructions du programme correspondant aux étapes E400 à E410 de la Fig. 4 et les charge en mémoire vive RAM 203b pour les exécuter.

Les étapes E800 et E801 étant respectivement identiques aux étapes E400 et E401 de la Fig. 4, celles-ci ne seront pas plus décrites.

A l'étape E802, le processeur 200b vérifie si des signaux de numérotation à fréquences vocales correspondant à des symboles prédéterminés ont été détectés.

Ces symboles prédéterminés sont par exemple et de manière non limitative la suite de symboles « #* ».

Ces signaux de numérotation à fréquences vocales ont été générés automatiquement par le processeur du combiné téléphonique 120b à l'étape E603 de la Fig. 6 précédemment décrite.

A la détection des signaux de numérotation à fréquences vocales correspondant aux symboles prédéterminés, le processeur 200b passe à l'étape suivante E803.

A l'étape E803, le processeur 200b du dispositif de visiophonie 20 commande le transfert par l'intermédiaire de l'interface réseau 207b et du réseau de télécommunication par paquets d'un message à destination du serveur de mise en relation 185.

Selon un mode préféré de réalisation, l'établissement de la session de visiophonie est effectué conformément au protocole SIP.

Bien entendu, d'autres protocoles peuvent être utilisés dans la présente invention. Ces protocoles sont par exemple le protocole H323 ou le protocole MGCP.

Le message transféré à l'étape E306 est un message de type « Register » conforme au protocole SIP.

Le message « Register » est un message pour enregistrer le dispositif de visiophonie 100b au serveur de mise en relation 185. Ce message comprend l'adresse URL ainsi que l'adresse IP du dispositif de visiophonie 100b.

Cette opération effectuée, le processeur 200b attend à l'étape suivante E804 la réception par l'intermédiaire de l'interface réseau 207b et du réseau de télécommunication 180 d'un message de confirmation du serveur de mise en relation 185.

Ce message est du type « 200 OK » lorsque le protocole SIP est utilisé.

Si aucun message n'est reçu, le serveur de mise en relation 185 n'a pas accepté l'enregistrement du dispositif de visiophonie 100b à une session de visiophonie et le processeur 200b arrête le présent algorithme.

Si un message de confirmation d'enregistrement est reçu, le processeur 200b passe à l'étape suivante E805.

A l'étape E805, le processeur 200b commande le transfert d'un message vocal à destination du combiné téléphonique 120b par l'intermédiaire de l'interface réseau RTC 210.

Ce message, noté message C20, est représentatif de la compatibilité et de l'acceptation par le serveur de mise en relation 185 de l'enregistrement du dispositif de visiophonie 100b à une session de visiophonie.

Le message C20 est par exemple constitué d'une série de signaux de numérotation à fréquences vocales DTMF.

Cette opération effectuée, le processeur 200b passe à l'étape suivante E806.

A cette étape, le processeur 200b vérifie pendant un laps de temps prédéterminé la réception d'un message noté D20 généré par le combiné téléphonique 120b.

Si aucun message de réponse D20 n'est reçu dans un laps de temps prédéterminé, le processeur 200b arrête le présent algorithme. En effet, une non réponse du combiné téléphonique 120b indique explicitement que l'abonné 20 ne désire pas que la communication téléphonique en cours sur le réseau RTC 170 soit basculée vers une session de visiophonie sur le réseau de télécommunication par paquets 180.

Si le processeur 200b reçoit un message noté D20 du combiné téléphonique 120b, le processeur 200b passe à l'étape suivante E807.

Les étapes E807 à E812 étant respectivement identiques aux étapes E405 à E410 de la Fig. 4, celles-ci ne seront pas plus décrites.

Lorsque l'étape E812 est effectuée, le processeur 200b arrête le présent algorithme.

Bien entendu, la présente invention n'est nullement limitée aux modes de réalisation décrits ici, mais englobe, bien au contraire, toute variante à la portée de l'homme du métier.

## Revendications

1. Procédé d'établissement d'une session de visiophonie entre deux dispositifs de visiophonie (100a, 100b) reliés par l'intermédiaire d'un réseau de télécommunication par paquets (180), **caractérisé en ce que** chaque dispositif de visiophonie est relié à un combiné téléphonique (120a, 120b), chaque combiné téléphonique est relié à un réseau téléphonique commuté (170) par l'intermédiaire du dispositif de visiophonie auquel il est relié et **en ce que** le procédé comporte les étapes, effectuées par chaque dispositif de visiophonie, de :
- détection (E300, E400) d'un établissement de communication téléphonique entre les deux combinés téléphoniques par l'intermédiaire du réseau téléphonique commuté,
- détection (E305, E402) d'au moins une commande prédéterminée générée à partir d'un des combinés téléphoniques,
- établissement (E312, E408) d'une session de visiophonie entre les deux dispositifs de visiophonie reliés aux combinés téléphoniques sur le réseau de télécommunication par paquets.

2. Procédé selon la revendication 1, **caractérisé en ce que** la commande prédéterminée est une combinaison prédéterminée de signaux de numérotation à fréquences vocales.

3. Procédé selon la revendication 1 ou 2, **caractérisé en ce que** chaque dispositif de visiophonie (100a, 100b) détecte une commande prédéterminée générée respectivement à partir du combiné téléphonique (120a, 120b) auquel il est relié.

4. Procédé selon l'une quelconque des revendications précédentes, **caractérisé en ce que** la session de visiophonie est effectuée par l'intermédiaire d'un serveur de mise en relation (185).

5. Procédé selon la revendication 4, **caractérisé en ce que** chaque dispositif de visiophonie s'enregistre auprès du serveur de mise en relation (E306, E403).

6. Procédé selon la revendication 5, **caractérisé en ce que** chaque dispositif de visiophonie reçoit une confirmation (E307, E404)de son enregistrement auprès du serveur de mise en relation et génère au moins un message prédéterminé à destination du combiné téléphonique auquel il est relié.

7. Procédé selon la revendication 5, **caractérisé en ce que** lors de l'établissement de la communication téléphonique entre les deux combinés téléphoniques, le numéro de téléphone du combiné téléphonique appelé composé à partir du combiné téléphonique appelant est détecté et mémorisé (E302, E303) par le dispositif de visiophonie relié au combiné téléphonique appelant.

8. Procédé selon la revendication 7, **caractérisé en ce que** le numéro de téléphone mémorisé est transféré par le dispositif de visiophonie relié au combiné téléphonique appelant par l'intermédiaire du réseau de télécommunication par paquets au serveur de mise en relation pour la détermination des identificateurs de ressources uniformes URI publiques et/ou privées correspondant au dispositif de visiophonie relié au combiné téléphonique appelé.

9. Procédé selon l'une quelconque des revendications précédentes, **caractérisé en ce que** le procédé comporte en outre l'étape de libération de la communication téléphonique entre les deux combinés téléphoniques par l'intermédiaire du réseau téléphonique commuté lorsque la session de visiophonie sur le réseau de télécommunication par paquets est établie entre les deux dispositifs de visiophonie.

10. Dispositif de visiophonie (100a, 100b) pour l'établissement d'une session de visiophonie entre deux dispositifs de visiophonie reliés par l'intermédiaire d'un réseau de télécommunication par paquets, **caractérisé en ce que** chaque dispositif de visiophonie (100a, 100b) est relié à un combiné téléphonique (120a, 120b), chaque combiné téléphonique est relié à un réseau téléphonique commuté (170), par l'intermédiaire du dispositif de visiophonie auquel il est relié et **en ce que** le dispositif de visiophonie comporte :
- des moyens de détection d'un établissement de communication téléphonique entre les deux combinés téléphoniques par l'intermédiaire du réseau téléphonique commuté,
- des moyens de détection d'au moins une commande prédéterminée générée à partir d'un des combinés téléphoniques,
- des moyens d'établissement d'une session de visiophonie entre les deux dispositifs de visiophonie reliés aux combinés téléphoniques sur le réseau de télécommunication par paquets.

11. Procédé d'établissement d'une session de visiophonie entre deux dispositifs de visiophonie (100a, 100b) reliés par l'intermédiaire d'un réseau de télécommunication par paquets (180), **caractérisé en ce que** chaque dispositif de visiophonie est relié à un combiné téléphonique (120a, 120b), chaque combiné téléphonique est relié à un réseau téléphonique commuté (170) par l'intermédiaire du dispositif de visiophonie auquel il est relié et **en ce que** le procédé comporte les étapes, effectuées par chaque combiné téléphonique, de :
- détermination lors d'une communication téléphonique avec un combiné téléphonique distant de la connexion (E503, E601) du combiné téléphonique distant au réseau téléphonique commuté (170) par l'intermédiaire d'un dispositif de visiophonie distant,
- commande (E504, E603) d'enregistrement du dispositif de visiophonie auquel le combiné téléphonique est relié à un serveur de mise en relation (185) par l'intermédiaire d'un réseau de télécommunication par paquets (180),
- information (E506, E605) de l'utilisateur du combiné téléphonique de la connexion du combiné téléphonique distant au réseau téléphonique commuté par l'intermédiaire d'un dispositif de visiophonie et de l'enregistrement du dispositif de visiophonie au serveur,
- commande d'établissement (E508, E607) d'une session de visiophonie entre le dispositif de visiophonie auquel le combiné téléphonique est relié et le dispositif de visiophonie distant, la session de visiophonie étant établie sur un réseau de télécommunication par paquets.

12. Combiné téléphonique destiné à être relié à un réseau téléphonique commuté par l'intermédiaire d'un dispositif de visiophonie, **caractérisé en ce que** le combiné téléphonique comporte :
- des moyens de détermination lors d'une communication téléphonique avec un combiné téléphonique distant de la connexion du combiné téléphonique distant au réseau téléphonique commuté par l'intermédiaire d'un dispositif de visiophonie distant,
- des moyens de commande d'enregistrement du dispositif de visiophonie auquel le combiné téléphonique est relié à un serveur de mise en relation par l'intermédiaire d'un réseau de télécommunication par paquets,
- des moyens d'information de l'utilisateur du combiné téléphonique de la connexion du combiné téléphonique distant au réseau téléphonique commuté par l'intermédiaire d'un dispositif de visiophonie et de l'enregistrement du dispositif de visiophonie au serveur,
- des moyens de commande d'établissement d'une session de visiophonie entre le dispositif de visiophonie auquel le combiné téléphonique est relié et le dispositif de visiophonie distant, la session de visiophonie étant établie sur un réseau de télécommunication par paquets.

13. Programme d'ordinateur stocké sur un support d'informations, ledit programme comportant des instructions permettant de mettre en oeuvre le procédé d'établissement d'une session de visiophonie selon l'une quelconque des revendications 1 à 9, lorsqu'il est chargé et exécuté par un système informatique.

14. Programme d'ordinateur stocké sur un support d'informations, ledit programme comportant des instructions permettant de mettre en oeuvre le procédé d'établissement d'une session de visiophonie selon la revendication 11, lorsqu'il est chargé et exécuté par un système informatique.
